# EUROPÄISCHE PATENTSCHRIFT

(11) **EP 0 518 285 B1**
(45) Veröffentlichungstag und Bekanntmachung des Hinweises auf die Patenterteilung: **26.10.1994**
(21) Anmeldenummer: 92109735.8
(22) Anmeldetag: 10.06.1992
(51) Int. Cl.: G01F 1/60

(54) **Schaltungsanordnung für eine Vorrichtung zur Messung des Volumenstroms eines ein Rohr durchfliessenden Mediums**
Circuit for a volume flow measuring device used for a medium flowing in a pipe
Circuit pour un dispositif de mesure du débit volumétrique d'un milieu en écoulement dans un tube

(30) Priorität: 12.06.1991 DE 4119372
(43) Veröffentlichungstag der Anmeldung: 16.12.1992
(73) Patentinhaber: Fischer & Porter GmbH, D-37079 Göttingen (DE)
(72) Erfinder: Nissen Peter, Dr., W-3405 Rosdorf (DE); Schäfer, Klaus, W-3510 Hann. Münden (DE)
(74) Vertreter: Fincke, Karl Theodor, Dipl.-Phys. Dr.

(56) Entgegenhaltungen:
- EP-A- 0 219 725
- DE-A- 2 743 954
- DE-A- 4 010 728

## Beschreibung

Die Erfindung betrifft eine Schaltungsanordnung für eine Vorrichtung zur Messung des Volumenstroms eines ein Rohr durchfließenden Mediums, die zwei auf einander gegenüberliegenden Seiten des Rohrs angeordnete Spulen und wenigstens ein Paar von Elektroden aufweist, die nächst der Innenfläche des Rohrs symmetrisch zu einer durch die Achse des Rohrs und eine gemeinsame Achse der Spulen definierten Ebene angeordnet sind, mit einer Erregerschaltung für die Spulen, die die Erregung der Spulen zur Erzeugung gleichsinnig und gegensinnig gerichteter Magnetfelder gestattet, und mit einer an die Elektroden angeschlossenen Auswerteschaltung zur Ableitung eines dem Volumenstrom des Mediums proportionalen Meßwertsignals.

Schaltungsanordnungen dieser Art sind nach der deutschen Patentschrift 2 743 954 bekannt. Die Erzeugung auch gegensinnig gerichteter Magnetfelder dient der Erkennung eines unsymmetrischen Strömungsprofils des Mediums im Rohr und wird zur Korrektur des Meßwertsignals genutzt. Nach der am 16.10.91 veröffentlichten EP-A-0 451 308 dient diese Maßnahme auch dazu, zu unterscheiden, ob das Medium das Rohr füllt oder nur teilweise füllt.

Bei den bekannten Schaltungsanordnungen kann es dazu kommen, daß durch vorübergehende elektrochemische Wechselwirkungen zwischen dem Medium und den Elektroden, zum Beispiel Polarisationsspannungsänderungen, Übersteuerungseffekte auftreten, die die Auswertung des Meßwertsignals instabil machen.

Aufgabe der Erfindung ist es, eine Schaltungsanordnung eingangs genannter Art anzugeben, die zu stabilen Meßwertsignalen führt.

Zur Lösung dieser Aufgabe ist die Schaltungsanordnung dadurch gekennzeichnet, daß den Spulen eine Taktgeber- und Phasenschieberanordnung einer gleichartigen, jedoch um 90° phasenversetzten, periodisch bipolaren Erregung beider Spulen zugeordnet ist, daß an die Elektroden eine Halteschaltung zum getrennten Festhalten der von den Elektroden abgegebenen Signale bei gleichsinnig in der einen Richtung erzeugten Magnetfeldern in einem ersten Halteglied, bei gleichsinnig in der anderen Richtung erzeugten Magnetfeldern in einem zweiten Halteglied, bei gegensinnig aufeinander zu gerichteten Magnetfeldern in einem dritten Halteglied und bei gegensinnig voneinander fort gerichteten Magnetfeldern in einem vierten Halteglied vorgesehen ist, daß eine erste Summierschaltung zum Summieren der in dem ersten Halteglied und in dem zweiten Halteglied gehaltenen Signale zur Erzeugung eines ersten Summensignals vorgesehen ist, daß eine zweite Summierschaltung zum Summieren der in dem dritten Halteglied und in dem vierten Halteglied gehaltenen Signale zur Erzeugung eines zweiten Summensignals vorgesehen ist und daß eine Korrekturschaltung vorgesehen ist, in der das erste Summensignal mit dem zweiten Summensignal zur Erzeugung des Meßwertsignals korrigiert wird.

Die Erfindung wird im folgenden an einem Ausführungsbeispiel unter Hinweis auf die beigefügten Zeichnungen beschrieben.

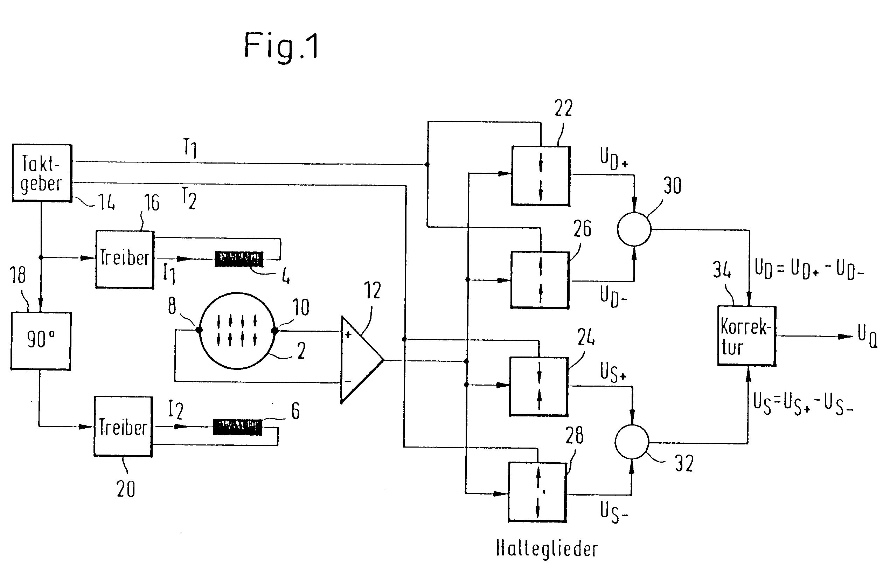

Fig. 1 zeigt ein Blockschaltbild der Schaltungsanordnung.

Fig. 2 zeigt Signalverläufe der Schaltungsanordnung nach Fig. 1.

Der Schaltungsanordnung ist eine Vorrichtung zur Messung des Volumenstroms eines ein Rohr 2 durchfließenden Mediums zugeordnet. Auf einander gegenüberliegenden Seiten des Rohrs ist je eine Spule 4, 6 angeordnet. Ein Paar von Elektroden 8, 10 (grundsätzlich können auch mehrere solcher Paare vorgesehen sein, wie in der nicht vorveröffentlichten EP-A-0 451 308 beschrieben) sind nächst der Innenfläche des Rohrs 2 symmetrisch zu einer durch die Achse des Rohrs 2 und eine gemeinsame Achse der Spulen 4, 6 definierten Ebene angeordnet. Mittels einer noch näher zu beschreibenden Erregerschaltung für die Spulen 4, 6 sind in dem Rohr 2 in der einen Richtung gleichsinnige, in der anderen Richtung gleichsinnige, gegensinnig aufeinander zu gerichtete und gegensinnig voneinander fort gerichtete Magnetfelder zu erzeugen, wie dies durch Pfeile im Rohr 2 angedeutet ist. An die Elektroden 8, 10 ist über einen Verstärker 12 eine noch näher zu beschreibende Auswerteschaltung angeschlossen, die der Ableitung eines dem Volumenstrom des das Rohr 2 durchfließenden Mediums proportionalen Meßwertsignals U_{Q} dient.

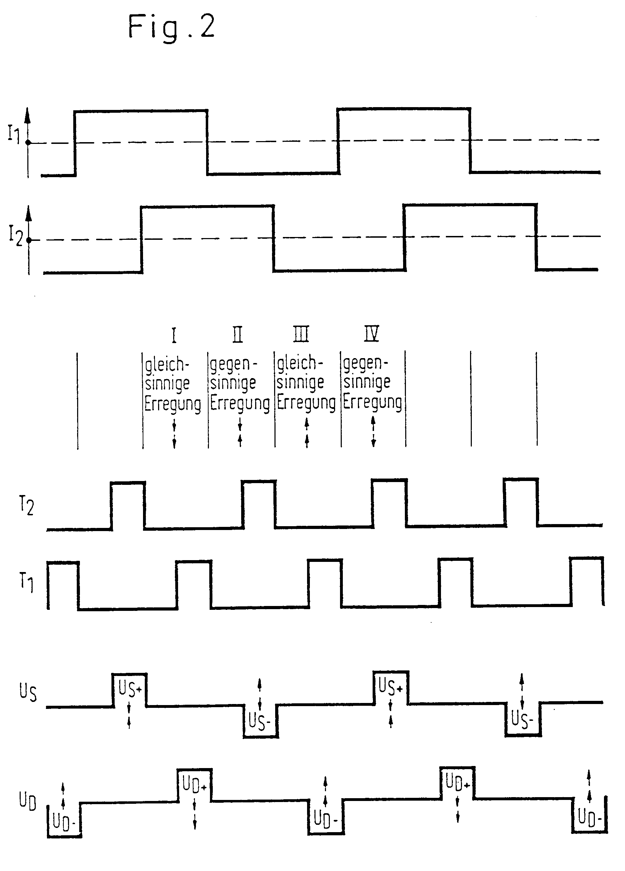

Den Spulen 4, 6 ist ein Taktgeber 14 zugeordnet, der einen Treiber 16 zur Abgabe eines Erregerstroms I₁ an die Spule 4 und über einen 90°-Phasenschieber 18 einem Treiber 20 zur Abgabe eines Erregerstroms I₂ an die Spule 6 derart steuert, wie dies durch die Diagramme I₁ und I₂ in Fig. 2 ersichtlich ist. Wegen der 90°-Phasenverschiebung erfolgt in den unter einander gleich langen Perioden I, II, III und IV ständig aufeinanderfolgend eine Erregung der Spulen 4, 6 zur Erzeugung gleichsinniger Magnetfelder in der einen Richtung, gegensinnig voneinander fort gerichteter Magnetfelder, gleichsinnig in die andere Richtung gerichteter Magnetfelder und gegensinnig aufeinander zu weisender Magnetfelder. Die dabei von den Elektroden 8 und 10 abgenommenen und in dem Verstärker 12 verstärkten Signale werden in den Perioden I in einem Halteglied 22, in den Perioden II in einem Halteglied 24, in den Perioden III in einem Halteglied 26 und in den Perioden IV in einem Halteglied 28 festgehalten, wofür Taktsignale T₁ und T₂ sorgen, die von dem Taktgeber 14 abgegeben werden und die Halteglieder 22, 24, 26, 28 öffnen und schließen. Die den gleichsinnigen Magnetfeldern zugeordneten, in den Haltegliedern 22 und 26 festgehaltenen Spannungen U_{D+} und U_{D-} werden in einer Summierschaltung 30 summiert. Die den gegensinnigen Magnetfeldern in den Haltegliedern 24 und 28 festgehaltenen Spannungen U_{S+} und U_{S-} werden in einer Summierschaltung 32 summiert. Die Summensignale U_{S} und U_{D} sind in Fig. 2 dargestellt. In einer Korrekturschaltung 34 wird das Summensignal U_{D} mit dem Summensignal U_{S} korrigiert, so daß das dem Volumenstrom des Mediums proportionale Meßwertsignal U_{Q} entsteht.

Da in der Schaltungsanordnung beide Erregerströme I₁ und I₂ die gleiche Frequenz und das gleiche Tastverhältnis haben, tritt keine permanente Umpolarisierung der Elektroden 8, 10 auf. Dementsprechend ist das Meßwertsignal U_{Q} permanent auswertbar.

Die Schaltungsanordnung gestattet nicht nur Unsymmetrien im Strömungsprofil des das Rohr 2 durchfließenden Mediums zu berücksichtigen, sondern auch einen nicht vollständigen Füllungsgrad des Rohrs 2, letzteres insbesondere dann, wenn mehr als ein Elektrodenpaar 8, 10 vorgesehen ist, wobei dann die Schaltungsanordnung selbstverständlich entsprechend zu modifizieren ist.

## Patentansprüche

1. Schaltungsanordnung für eine Vorrichtung zur Messung des Volumenstroms eines ein Rohr (2) durchfließenden Mediums, die zwei auf einander gegenüberliegenden Seiten des Rohrs (2) angeordnete Spulen (4, 6) und wenigstens ein Paar von Elektroden (8, 10) aufweist, die nächst der Innenfläche des Rohrs (2) symmetrisch zu einer durch die Achse des Rohrs (2) und eine gemeinsame Achse der Spulen (4, 6) definierten Ebene angeordnet sind, mit einer Erregerschaltung für die Spulen (4, 6), die die Erregung der Spulen (4, 6) zur Erzeugung gleichsinnig und gegensinnig gerichteter Magnetfelder gestattet, und mit einer an die Elektroden (8, 10) angeschlossenen Auswerteschaltung zur Ableitung eines dem Volumenstrom des Mediums proportionalen Meßwertsignals (U_{Q}),
**dadurch gekennzeichnet,**
daß den Spulen (4, 6) eine Taktgeber- und Phasenschieber-Anordnung (14, 18) zur Steuerung einer gleichartigen, jedoch um 90° phasenversetzten, periodisch bipolaren Erregung beider Spulen (4, 6) zugeordnet ist, daß an die Elektroden (8, 10) eine Halteschaltung (22, 24, 26, 28) zum getrennten Festhalten der von den Elektroden (8, 10) abgegebenen Signale bei gleichsinnig in der einen Richtung erzeugten Magnetfeldern in einem ersten Halteglied (22), bei gleichsinnig in der anderen Richtung erzeugten Magnetfeldern in einem zweiten Halteglied (26), bei gegensinnig aufeinander zu gerichteten Magnetfeldern in einem dritten Halteglied (24) und bei gegensinnig voneinander fort gerichteten Magnetfeldern in einem vierten Halteglied (28) vorgesehen ist, daß eine erste Summierschaltung (30) zum Summieren der in dem ersten Halteglied (22) und in dem zweiten Halteglied (26) gehaltenen Signale (U_{D+}, U_{D-}) zur Erzeugung eines ersten Summensignals (U_{D}) vorgesehen ist, daß eine zweite Summierschaltung (32) zum Summieren der in dem dritten Halteglied (24) und in dem vierten Halteglied (28) gehaltenen Signale (U_{S+}, U_{S-}) zur Erzeugung eines zweiten Summensignals (U_{S}) vorgesehen ist und daß eine Korrekturschaltung (34) vorgesehen ist, in der das erste Summensignal (U_{D}) mit dem zweiten Summensignal (U_{S}) zur Erzeugung des Meßwertsignals (U_{Q}) korrigiert wird.

## Claims

1. Circuit arrangement for a device for measuring the volume flow of a medium flowing through a pipe (2), having two coils (4,6) arranged on opposite sides of the pipe (2) and at least one pair of electrodes (8,10) which are arranged adjacent to the inner surface of the pipe (2) symmetrically with respect to a plane defined by the axis of pipe (2) and by an axis common to the coils (4,6), having an exciter circuit for the coils (4,6) which enables the coils (4,6) to be excited in order to generate magnetic fields in the same direction and in opposite directions, and having an evaluator circuit connected to the electrodes (8,10) for deriving a data signal (U_{Q}) proportional to the volume flow of the medium,
characterised in that associated with the coils (4,6) there is a timing and phase shift arrangement (14,18) for controlling a periodically bipolar excitation of the two coils (4,6) in similar manner but 90° out of phase with each other, in that on the electrodes (8,10) is provided a holding circuit (22, 24, 26, 28) for separately holding the signals emitted by the electrodes (8,10), in a first holding means (22) in the case of magnetic fields generated so that they are directed in the same direction, in a second holding means (26) in the case of magnetic fields generated so that they are directed in the other direction, in a third holding means (26) in the case of magnetic fields directed towards one another in opposite directions and in a fourth holding means (28) in the case of magnetic fields directed away from one another in opposite directions, in that a first adding circuit (30) is provided for adding the signals (U_{D+}, U_{D-}) held in the first holding member (22) and in the second holding member (26) in order to generate a first total signal (U_{D}), in that a second adding circuit (32) is provided for adding the signals (U_{S+}, U_{S-}) held in the third holding member (24) and in the fourth holding member (28) in order to generate a second total signal (U_{S}) and in that a correcting circuit (34) is provided in which the first total signal (U_{D}) is corrected with the second total signal (U_{S}) to generate the data signal (U_{Q}).

## Revendications

1. Circuit pour-un dispositif de mesure du débit volumétrique d'un milieu s'écoulant par un tube (2), qui comprend deux bobines (4, 6) disposées sur les côtés mutuellement opposés du tube (2) et au moins une paire d'électrodes (8, 10) qui sont disposées à proximité de la surface interne du tube (2) symétriquement par rapport à un plan défini par l'axe du tube (2) et un axe commun des bobines (4, 6), comprenant un circuit d'excitation pour les bobines (4, 6) qui permet l'excitation des bobines (4, 6) pour créer des champs magnétiques de même sens et de sens contraire, et comprenant un circuit d'évaluation raccordé aux électrodes (8, 10) pour en dériver un signal de valeur de mesure (U_{Q}) proportionnel au débit volumétrique du milieu, caractérisé en ce qu'il est associé aux bobines (4, 6) un agencement d'horloge et de décalage de phase (14, 18) pour provoquer une excitation de même type périodiquement bipolaire mais décalée en phase de 90° des deux bobines (2, 6), en ce qu'il est prévu pour les électrodes (8, 10) un circuit de retenue (22, 24, 26, 28) pour retenir de façon séparée les signaux émis par les électrodes (8, 10) et comprenant un premier organe de retenue (22) pour les champs magnétiques produits dans le même sens dans la même direction, un second organe de retenue (26) pour les champs magnétiques produits dans le même sens dans l'autre direction, un troisième organe de retenue (24) pour les champs magnétiques produits en sens contraire et dirigés l'un vers l'autre, et un quatrième organe de retenue (28) pour les champs magnétiques produits en sens contraire et en s'éloignant l'un de l'autre, en ce qu'un premier circuit sommateur (30) est prévu pour effectuer la sommation des signaux (U_{D+}, U_{D-}) retenus dans le premier organe de retenue (22) et dans le second organe de retenue (26) pour produire un premier signal sommateur (U_{D}), en ce qu'un second circuit sommateur (32) est prévu pour effectuer la sommation des signaux (U_{S+}, U_{S-}) retenus dans le troisième organe de retenue (24) et dans le quatrième organe de retenue (28) pour produire un second signal sommateur (U_{S}), et en ce qu'il est prévu un circuit de correction (34) dans lequel le premier signal sommateur (U_{D}) est corrigé par le second signal sommateur (U_{S}) pour produire le signal de valeur de mesure (U_{Q}).
